# EUROPEAN PATENT SPECIFICATION

(11) **EP 3 050 283 B1**
(45) Date of publication and mention of the grant of the patent: **17.05.2017**
(21) Application number: 13770899.6
(22) Date of filing: 27.09.2013
(51) Int. Cl.: H04L 29/08, H04L 12/24, H04W 4/00

(54) **PROVIDING NETWORK MANAGEMENT INFORMATION IN A COMMUNICATIONS NETWORK**
BEREITSTELLUNG VON NETZWERKVERWALTUNGSINFORMATIONEN IN EINEM KOMMUNIKATIONSNETZ
FOURNITURE D'INFORMATION DE GESTION DE RÉSEAU DANS UN RÉSEAU DE COMMUNICATION

(43) Date of publication of application: 03.08.2016
(73) Proprietor: Telefonaktiebolaget LM Ericsson (publ), 164 83 Stockholm (SE)
(72) Inventor: JIMÉNEZ, Jaime, FI-00530 Helsinki (FI)
(74) Representative: Ericsson
(86) International application number: PCT/EP2013/070273
(87) International publication number: WO 2015/043666

(56) References cited:
- GHINITA G ET AL: "An Adaptive Stabilization Framework for Distributed Hash Tables", PROCEEDINGS. 20TH INTERNATIONAL PARALLEL AND DISTRIBUTED PROCESSING SYMPOSIUM (IEEE CAT. NO.06TH8860), IEEE PISCATAWAY, NJ, USA, 25 April 2006 (2006-04-25), pages 1-10, XP010920239, DOI: 10.1109/IPDPS.2006.1639269 ISBN: 978-1-4244-0054-6
- LI JUN ET AL: "A Novel Network Management Architecture for Self-organizing Network", NETWORKING, ARCHITECTURE, AND STORAGE, 2007. NAS 2007. INTERNATIONAL C ONFERENCE ON, IEEE, PI, 1 July 2007 (2007-07-01), pages 146-154, XP031124539, ISBN: 978-0-7695-2927-1
- FERNANDES D L ET AL: "A Secure Mobile Agents Platform Based on a Peer-to-Peer Infrastructure", NETWORKING, INTERNATIONAL CONFERENCE ON SYSTEMS AND INTERNATIONAL CONF ERENCE ON MOBILE COMMUNICATIONS AND LEARNING TECHNOLOGIES, 2006. ICN/I CONS/MCL 2006. INTERNATIONAL CONFERENCE ON MORNE, MAURITIUS 23-29 APRIL 2006, PISCATAWAY, NJ, USA,IEEE, 23 April 2006 (2006-04-23), pages 189-189, XP010914710, DOI: 10.1109/ICNICONSMCL.2006.32 ISBN: 978-0-7695-2552-5
- ROBERTO RIGGIO ET AL: "JANUS: A Framework for Distributed Management of Wireless Mesh Networks", TESTBEDS AND RESEARCH INFRASTRUCTURE FOR THE DEVELOPMENT OF NETWORKS A ND COMMUNITIES, 2007. TRIDENTCOM 2007. 3RD INTERNATIONAL CONFERENCE ON, IEEE, PI, 1 May 2007 (2007-05-01), pages 1-7, XP031211419, ISBN: 978-1-4244-0738-5

## Description

### TECHNICAL FIELD

The invention relates to the field of providing network management information in a communications network.

### BACKGROUND

The Simple Network Management Protocol (SNMP) is an Internet protocol for network management. It is typically used by network administrators to monitor and map network performance, availability and errors.

An SNMP network managed device implements an SNMP interface and has a software agent that runs on the managed device. Examples of managed devices include network elements such as router, servers, hubs and so on. SNMP allows node specific information to be provided to a Network Management System (NMS). The agent obtains information about local conditions at the node, and translates this into a form that the NMS can interpret.

While SNMP is often used in a client/server type of network, it can also be adapted for use in a distributed network in conjunction with Distributed Hash Tables (DHT). A DHT provides a lookup service using key/value pairs, and allows any node to retrieve a value associated with a particular key. Information is associated with a particular key, and the node storing that information can be identified by hashing the key. A requesting node that requires information from the node can therefore look up the key associated with the information and hash the key in order to obtain the identity of the storing node.

For SNMP in a distributed network, a DHT can be used to identify agents that are managed by a particular manager.

Document XP 010920239 discloses the usage of Distributed Hash Tables (DHT) in an overlay network for stabilization procedure.

### SUMMARY

DHTs in a distributed network operate stabilization procedures to ensure that the routing information is consistent throughout the overlay. These stabilization procedures are usually performed periodically and at regular intervals. A stabilization procedure may also be triggered depending on the churn of the overlay. For example, a peer node in a distributed network may update its routing table when a neighbor ungracefully leaves the overlay. This ensures that, as network circumstances and conditions change, the DHT is updated.

If the overlay is of large size, periodic stabilization has less risk of creating congestion and uses less bandwidth, as described in Rhea, S., Geels, D., Roscoe, T., and J. Kubiatowicz, "Handling churn in a DHT", In Proc. of the USENIX Annual Technical Conference June 2004. For this reason most existing DHTs incorporate periodic stabilization procedures in the logic of the overlay.

As described above, SNMP defines a manager and an agent. The manager usually sends messages towards the agents and sends instructions determining when the agent has to send Trap messages, or instructing the agent to report Errors when they occur. Among the messages sent the 'Get bulk' message (see RFC 1905 SNMPv2, section 4.2.3) operation is the most demanding and time consuming.

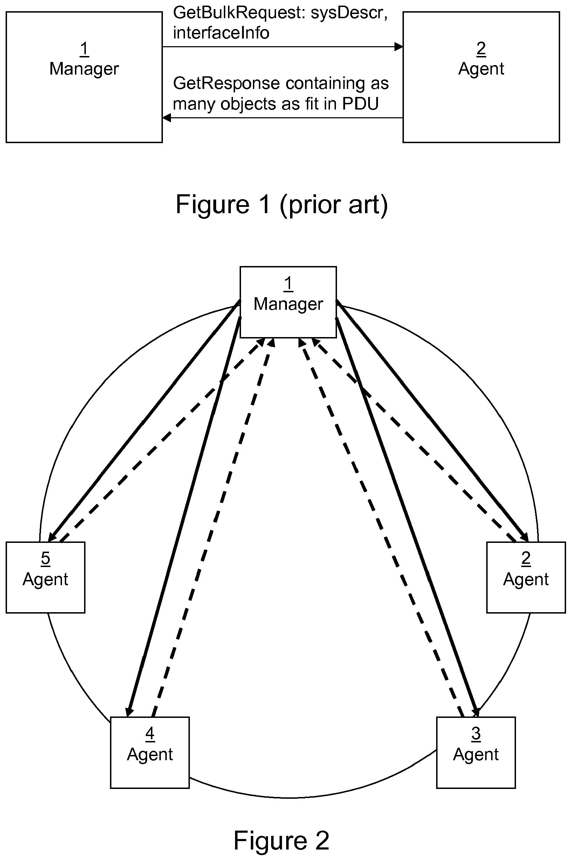

The purpose of the GetBulkRequest-Protocol Data Unit (PDU) is to request the transfer of a potentially large amount of data, for example a large amount of entries in the Management Information Base (MIB) on the agent. This is done in order to minimize the number of messages sent when retrieving a lot of information. Referring to Figure 1, a manager 1 sends a GetBulkRequest message to an agent 2. The GetBulkRequest message instructs the agent 2 to send as much data to the manager 1 as the PDU can carry. The Bulk-Request command defines two variables: *non-repeaters* and *max-repetitions.*

Machine to machine (M2M) networks allow network nodes to exchange information without human intervention, and are typically distributed. In the M2M scenario, the peers of the DHT act as agents, managers or both simultaneously. However SNMP has not been fully adapted to this scenario. A significant problem is to store the MIB in the peers themselves. When a manager requires a lot of data from the MIB, in the agents or from the DHT itself, it has to query each individual peer one by one or it has to retrieve some resource in the DHT where this data is stored. This can lead to a significant amount of signaling. It is an object to reduce the amount of signalling required in this situation. It is also an object to more efficiently manage SNMP signalling in a distributed network.

According to a first aspect, there is provided a method of providing network management information to a manager node in a distributed communication network. An agent node in the distributed communication network receives a Distributed Hash Table (DHT) overlay stabilization procedure message. The overlay stabilization procedure message includes an instruction for the agent node to send network management information to the manager node. The agent node then sends network management information to the manager node. An advantage of this is that requests for network management information can be piggybacked onto overlay stabilization messages which in any case are sent to all nodes in the distributed communication network, thereby greatly reducing the required amount of signalling.

Different protocols for sending network management information may be used. The method optionally uses Simple Network Management Protocol (SNMP) or Open Mobile Alliance Device Management (OMADM) protocol.

As an option, the instruction may be a get bulk request message, a get request message or a set request message.

The overlay stabilization procedure message is optionally sent periodically, or sent in the event that an update is required owing to a change in network conditions.

As an option, the instruction further includes any of an indication that the manager node is authorized as a manager node, an identity of at least one node from which network management information is required, and adjustments to any of non-repeater and maximum repetition fields. By providing the identities of nodes from which network management information is required, only those nodes need reply to the manager, further reducing the amount of signalling necessary.

The method optionally includes determining if network management information has previously been sent to the manager node. If so, a determination is made as to whether any changes to the management information have occurred. If so, the agent sends the network management information to the manager node. This avoids unnecessary signalling in the event that no changes have been made to the required network management information.

As an option, the method includes determining if network management information has been requested from the agent node and, if so, sending the network management information to the manager node.

According to a second aspect, there is provided an agent node for use in a distributed communication network. The agent node is provided with a network management protocol agent and a receiver for receiving a DHT overlay stabilization procedure message. The overlay stabilization procedure message includes an instruction for the agent node to send network management information to a manager node. A processor is provided for generating a response message, the response message including the required network management information. A transmitter is also provided for sending the response message to the manager node.

The processor is optionally arranged to determine the presence, in the DHT overlay stabilization procedure message, of any of an indication that the manager node is authorized as a manager node, an identity of at least one node from which network management information is required, and adjustments to any of non-repeater and maximum repetition fields.

As an option, the processor is arranged to determine if network management information has previously been sent to the manager node and, if so, determine if any changes to the management information have occurred.

The processor is optionally arranged to determine if network management information has been requested from the agent node.

According to a third aspect there is provided a manager node for use in a distributed communication network. The manager node is provided with a network management manager. A transmitter is provided for sending towards an agent node a DHT overlay stabilization procedure message. The overlay stabilization procedure message including an instruction for the agent node to send network management information to a manager node. A receiver is provided for receiving network management information from the agent node.

According to a fourth aspect there is provided a computer program comprising computer readable code means which, when run on an agent node in a distributed communication network, causes the agent node to perform the method described above in the first aspect.

According to a fifth aspect there is provided a computer program comprising computer readable code means which, when run on a manager node in a distributed communication network, causes the manager node perform the steps of sending towards an agent node a DHT overlay stabilization procedure message. The overlay stabilization procedure message includes an instruction for the agent node to send network management information to a manager node. The manager node then receives network management information from the agent node.

According to a sixth aspect there is provided a computer program product comprising a computer readable medium and a computer program as described in either of the fourth or fifth aspects, wherein the computer program is stored on the computer readable medium.

### BRIEF DESCRIPTION OF THE DRAWINGS

Figure 1 illustrates schematically in a block diagram a GetBulkRequest message and response between a manager and an agent in an SNMP enabled network;
Figure 2 illustrates schematically in a block diagram exemplary GetBulkRequest messages and responses between a manager and a plurality of agents in a distributed SNMP enabled network;
Figure 3 is a flow diagram showing exemplary steps;
Figure 4 illustrates schematically in a block diagram an exemplary GetBulkRequest message sent using DHT stabilization procedures, and responses towards a manager from a plurality of agents in a distributed SNMP enabled network;
Figure 5 illustrates schematically in a block diagram an exemplary agent node; and
Figure 6 illustrates schematically in a block diagram an exemplary manager node.

### DETAILED DESCRIPTION

There is described herein a way of providing network management information to a manager node in a distributed communication network. While the following description refers to the network management information being provided using Simple Network Management Protocol (SNMP), it will be appreciated that other network management protocols may be used. Examples of other network management protocols include Open Mobile Alliance Device Management (OMADM) and OMADM Lightweight.

Referring to Figure 2, consider a scenario in which a manager node 1 must collect some information from a plurality of agent nodes 2, 3, 4, 5 in a distributed communication network. Assuming that manager node 1 requires network management information such as device status, system uptime and network utilization for multiple interfaces and on multiple agents 2, 3, 4, 5. Using normal network management procedures, such as those provided by SNMP, the manager node 1 sends a getbulkRequest towards every agent 2, 3, 4, 5. In Figure 2, the solid lines represent each getbulkRequest message sent from the manager node 1, and the dashed lines represent each response from the agent nodes 2, 3, 4, 5. The SNMP signalling is performed as thought the network is a regular client/server network, as regular SNMP is not designed for distributed networks. In this case it is necessary to send at least one message per agent node. While this does not appear to be problematic in the example of Figure 2, it would become very resource intensive in a very large and complicated distributed network.

For example, if each agent 2, 3, 4, 5 has four interfaces, for every agent the manager node 1 would need to send an individual message as follows:

```
       Request-GetBulk
       non-repeaters = 1
       max-repetitions = 4
       sysUpTime.0
       iflnOctets
```

Each agent node 2, 3, 4, 5 replies with its uptime, its status (if connected) and some parameter defining whether the interface is in use or not to the manager node 1 and the manager node 1 will receive the information and process it. This is extremely inefficient and resource intensive in a large distributed network.

It has been realized that network management signalling can be sent much more efficiently by piggybacking the signalling on a Distributed Hash Table (DHT) overlay stabilization message. Such a message is sent to all nodes in the distributed network, and so the manager node 1 would only need to send a message such as a getbulkRequest message to one node. The message would then be propagated throughout the distributed network and any relevant agent nodes 2, 3, 4, 5 could respond to the manager node 1.

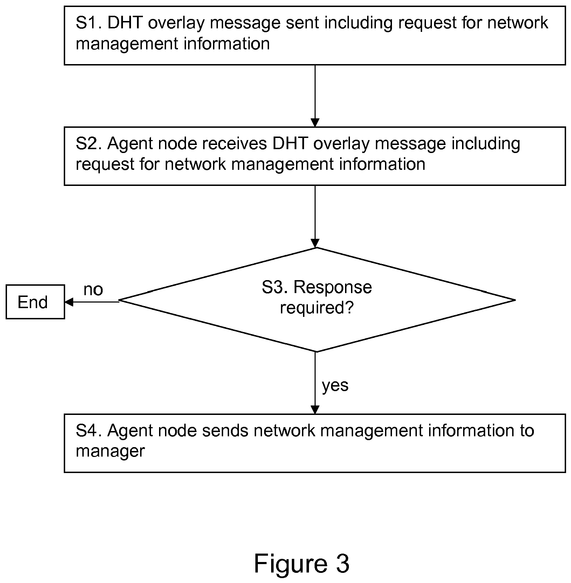

Figure 3 is a flow diagram illustrating an exemplary process. The following numbering corresponds to that of Figure 3:
S1. A DHT overlay stabilization message is sent. The DHT overlay stabilization message includes a request for network management information, for example sent using SNMP. The DHT overlay stabilization message may be sent by the manager node 1 itself, or the manager node may delegate the sending of the overlay stabilization message to another peer in the distributed network. Alternatively, logic in any node in the distributed network may trigger the sending of the overlay stabilization message if certain conditions are met. Examples of such conditions include a lot of churn in the overlay, or when a routing table becomes larger than a predetermined size.
S2. The agent node 2 receives the DHT overlay stabilization message and, in addition to handling the overlay stabilization message, handles the network management information.
S3. A determination is made as to whether the agent node needs to respond to the network management message. For example, the network management information may specify that only certain agents need respond to the message, in which case the agent node 2 may not respond. Alternatively, no change may have occurred to the network management information at the agent node 2 since a last update was sent, in which case the agent node 2 need not respond.
S4. If a response is required, the agent node 1 sends a response to the manager node 1.
   Examples of piggybacked information include an indication of whether a device is active or not and whether it is a manager or not. An exemplary Overlay stabilization message is sent using the Chord DHT algorithm. This has a recommended periodic update at least every 360 seconds. A peer node that is also a manager node 1 is provisioned with variables to enable this of mechanism:
   When sending the getbulkRequest (or other type of request message, such as a getrequest message or a setrequest message), the manager node must inform other nodes in the distributed network that it is a full peer node, and that it has management authorization. The request message may provide a list of nodes from which an update is required, and may adjust the non-repeaters and max-repetitions fields.

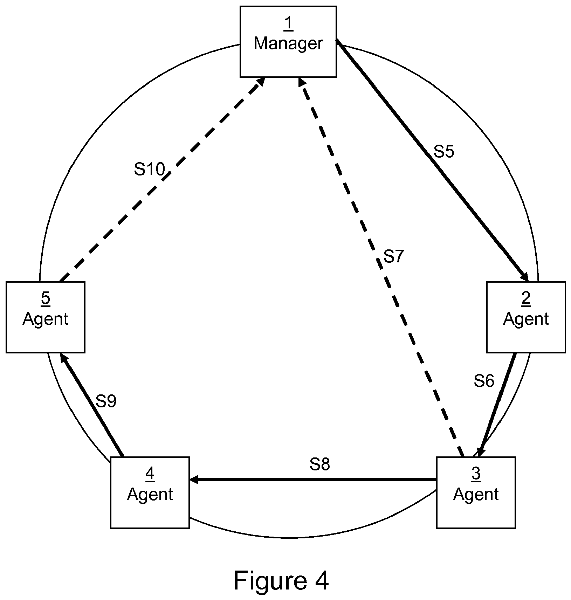

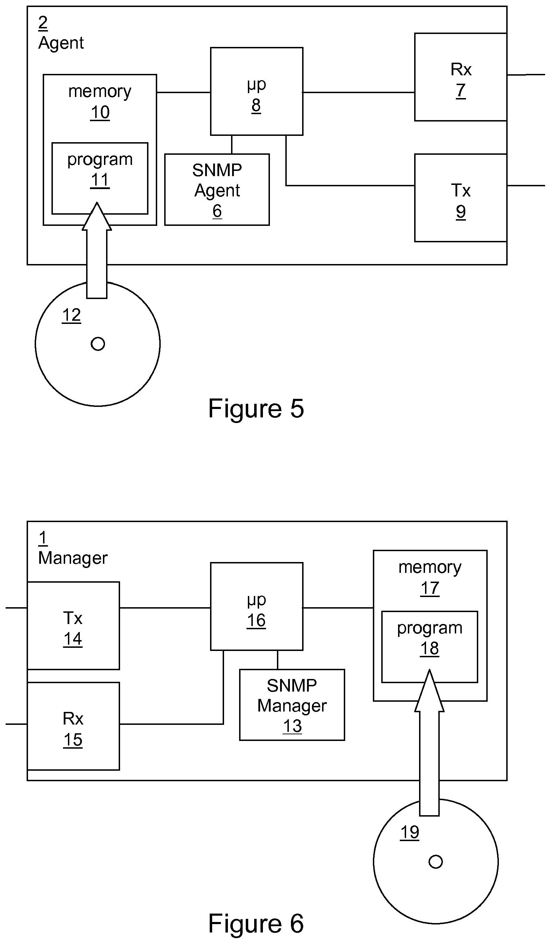

   In addition to other configuration parameters and variables relating to the network management protocol, the device may also take into account the size of the successor and finger tables, as is currently done with Chord's static configuration.
   Turning to Figure 4, there is illustrated an exemplary DHT overlay stabilization message sequence in which an SNMP getbulkRequest message is piggybacked onto the DHT overlay stabilization message. The following numbering corresponds to that of Figure 5.
S5. The manager node 1 sends a DHT overlay stabilization message towards agent node 2. The message includes an SNMP getbulkRequest message. Agent node 2 determines that it is not identified in the SNMP request, and so does not respond to the manager node 1.
S6. The DHT overlay stabilization message is sent from agent node 2 to agent node 3, which determines that a response is required to the SNMP getbulkRequest message.
S7. Agent node 3 sends an SNMP response to the manager node.
S8. The DHT overlay stabilization message is sent from agent node 3 to agent node 4, which determines that a response is required to SNMP getbulkRequest, but also determines that the requested information has not changed since agent node 4 last responded. It therefore does not send a response to the manager node 1.
S9. The DHT overlay stabilization message is sent from agent node 4 to agent node 5, which determines that a response is required to the SNMP getbulkRequest message.
S10. Agent node 5 sends an SNMP response to the manager node.

It can be seen from a comparison of Figures 3 and 4 that using the piggybacking technique described above, the manager node 1 need only send one message, greatly reducing the signalling required.

The technique can be modified by taking advantage of the underlying mechanisms of the overlay.

In a first exemplary technique, the manager node 1 sends a message around the overlay. When the message is received by a peer acting as an agent 2, it triggers a reply to the manager with the requested information. The peer also forwards the message to the next peer acting as an agent 3. This is the scenario illustrated in Figure 5. There is still be a lot of messaging towards the manager node 1 but it is still be half of it was required before (since the manager node 1 sends only one message). On a destinationlist, the manager node 1 sets a list of target peer nodes, each of the peers on the list would have to reply with the status.

In a second exemplary technique, the manager node 1 does not send anything. The overlay is configured to update the generic information periodically, at the same time that periodic stabilization is being performed, and send the Delta information (modifications on the status) to the manager node 1 automatically. When a peer node sends a message to its successor to check its routing table, it also includes this generic information (interface activity, status, etc.). If something has changed, the peer node sends an update to the manager node 1, and otherwise it does not send anything. In this example, the manager is passive and receives updated information from peer nodes in the distributed network.

In a third exemplary technique, the manager node 1 sends a message with a very large maximum PDU size for the periodic update. Each peer node on the destination list appends its information to the message and forwards it to the next peer in the destination list. If, when appending, the maximum PDU size is reached, the peer node sends the update as it is to the manager node 1, removes the information already in the list, appends its own information and forwards the message to the next peer node in the list. In this way, the manager node 1, instead of receiving thousands of replies, will receive very few (and very large) messages with all the required status information.

Figure 5 herein illustrates schematically in a block diagram an exemplary agent node 2. The agent node 2 is provided with a network management protocol agent 6, such as an SNMP agent. A receiver 7 is provided for receiving the DHT overlay stabilization procedure message. As described above, the overlay stabilization procedure message includes an instruction for the agent node 2 to send network management information to the manager node 1. A processor 8 is provided for generating a response message, the response message including the required network management information. A transmitter 9 is also provided for sending the response message to the manager node. Note that the network management protocol agent 6 is typically a software agent running on the processor 8.

A computer readable medium in the form of a memory 10 is also provided. This may be used to store data such as network management information. It may also be used to store a computer program 11 which, when executed by the processor 8, causes the processor 8 to behave as described above.

The program 11 may additionally or alternatively be stored on an external memory 12 such as a flash drive or a Compact Disk, from which it can be transferred into the memory 10 or directly into the processor 8.

Figure 6 herein illustrates schematically in a block diagram an exemplary manager node 1. The manager node 1 is provided with a network management manager 13, such as an SNMP manager. A transmitter 14 is provided for a DHT overlay stabilization message towards an agent node 2, the overlay stabilization procedure message including an instruction for the agent node 2 to send network management information to a manager node 1. A receiver 15 is also provided for receiving network management information from the agent node 2. The network management manager 13 is typically provided as software running on a processor 16.

A computer readable medium in the form of a memory 17 is also provided. This may be used to store data such as network management information. It may also be used to store a computer program 18 which, when executed by the processor 16, causes the processor 16 to behave as described above.

The program 18 may additionally or alternatively be stored on an external memory 19 such as a flash drive or a Compact Disk, from which it can be transferred into the memory 17 or directly into the processor 16.

Network management protocols such as SNMP can be optimized by piggybacking the signalling onto P2P features such as DHT overlay stabilization messages. In P2P networks such as M2M networks, continuous monitoring is fundamental. In order to scale network management protocols such as SNMP, it is very useful to re-use features that already help P2P systems to scale.

SNMP is in use on ISPs for management of their network, but the scale expected from M2M networks will greatly surpass in number of devices that of the largest ISP. Instead of increasing the resources of existing SNMP servers to account for large distributed networks, it is much more efficient to delegate some of the SNMP (or other network management protocol) operations to the underlying DHT overlay stabilization signalling. This simplifies management operations in distributed M2M networks.

It will be appreciated by a person of skill in the art that various modifications may be made to the above described embodiment without departing from the scope of the present disclosure. Different embodiments have been described above, but the skilled person will readily be able to adapt the teachings to other types of network management protocol.

The following abbreviations have been used in the above description:
- DHT: Distributed Hash Table
- M2M: machine to machine
- MIB: Management Information Base
- NMS: Network Management System
- OMADM: Open Mobile Alliance Device Management
- P2P: Peer to peer
- PDU: Protocol Data Unit
- SNMP: Simple Network Management Protocol

## Claims

1. A method at an agent node (2) of providing network management information to a manager node (1) in a distributed communication network, the method **characterized by** the steps of:
receiving (S2) a Distributed Hash Table, DHT, overlay stabilization procedure message, the overlay stabilization procedure message including an instruction for the agent node to send network management information to the manager node; and
sending (S4) network management information to the manager node.

2. The method according to claim 1 wherein the network management information is sent using any of Simple Network Management Protocol, SNMP, and Open Mobile Alliance Device Management, OMADM protocol.

3. The method according to claim 1 or 2, wherein the instruction comprises any of a get bulk request message, a get request message and a set request message.

4. The method according to any one of claims 1 to 3, wherein the overlay stabilization procedure message is sent any of periodically and in the event that an update is required owing to a change in network conditions.

5. The method according any one of claims 1 to 4, wherein the instruction further includes any of:
an indication that the manager node is authorized as a manager node;
an identity of at least one node from which network management information is required; and
adjustments to any of non-repeater and maximum repetition fields.

6. The method according to any one of claims 1 to 5, further comprising:
determining if network management information has previously been sent to the manager node and, if so, determining if any changes to the management information have occurred and, if so, sending the network management information to the manager node.

7. The method according to any one of claims 1 to 6, further comprising:
determining (S3) if network management information has been requested from the agent node and, if so, sending the network management information to the manager node.

8. An agent node (2) for use in a distributed communication network, the agent node comprising a network management protocol agent (6) and wherein the agent node is
**characterized in that** it further comprises:
a receiver (7) for receiving a Distributed Hash Table, DHT, overlay stabilization procedure message, the overlay stabilization procedure message including an instruction for the agent node (2) to send network management information to a manager node (1);
a processor (8) for generating a response message, the response message including the required network management information; and
a transmitter (9) for sending the response message to the manager node (1).

9. The agent node (2) according to claim 8, wherein the processor (8) is arranged to determine the presence, in the DHT overlay stabilization procedure message, of any of:
an indication that the manager node is authorized as a manager node;
an identity of at least one node from which network management information is required; and
adjustments to any of non-repeater and maximum repetition fields.

10. The agent node (2) according to claim 8 or 9, wherein the processor (8) is arranged to determine if network management information has previously been sent to the manager node (1) and, if so, determine if any changes to the management information have occurred.

11. The agent node (2) according to any one of claims 7 to 10, wherein the processor (8) is arranged to determine if network management information has been requested from the agent node.

12. A manager node (1) for use in a distributed communication network, the manager node comprising a network management manager (13) and wherein the manager node is **characterized in that** it further comprises:
a transmitter (14) for sending towards an agent node (2) a Distributed Hash Table, DHT, overlay stabilization procedure message, the overlay stabilization procedure message including an instruction for the agent node (2) to send network management information to a manager node (1); and
a receiver (15) for receiving network management information from the agent node (2).

13. A computer program (11), comprising computer readable code means which, when run on an agent node (2) in a distributed communication network, causes the agent node to perform the method according to any one of claims 1 to 7.

14. A computer program (18), comprising computer readable code means **characterized in that,** when run on a manager node (1) in a distributed communication network, it causes the manager node to perform the steps of:
sending towards an agent node (2) a Distributed Hash Table, DHT, overlay stabilization procedure message, the overlay stabilization procedure message including an instruction for the agent node to send network management information to a manager node; and
receiving network management information from the agent node.

15. A computer program product comprising a computer readable medium (10; 12; 17; 19) and a computer program (11; 18) according to claim 13 or claim 14, wherein the computer program is stored on the computer readable medium.

## Patentansprüche

1. Verfahren, an einem Agenten-Knoten (2), zum Bereitstellen von Netzwerkverwaltungsinformation für einen Manager-Knoten (1) in einem verteilten Kommunikationsnetzwerk, das Verfahren **gekennzeichnet durch** die Schritte:
Empfangen (S2) einer verteilten Hash-Tabellen, DHT,-Überlagerungs-Stabilisierungs-Verfahrensmeldung, wobei die Überlagerungs-Stabilisierungs-Verfahrensmeldung eine Anweisung für den Agenten-Knoten zum Senden von Netzwerkverwaltungsinformation zu dem Manager-Knoten aufweist; und
Senden (S4) von Netzwerkverwaltungsinformation zu dem Manager-Knoten.

2. Verfahren nach Anspruch 1, wobei die Netzwerkverwaltungsinformation unter Verwendung eines von einem einfachen Netzwerkverwaltungsprotokoll, SNMP, und einem offenen mobilen Allianz-Geräteverwaltungs-, OMADM, Protokoll gesendet wird.

3. Verfahren nach Anspruch 1 oder 2, wobei die Anweisung eine von einer Get-Bulk-Anforderungsmeldung, einer Get-Anforderungsmeldung und einer Set-Anforderungsmeldung umfasst.

4. Verfahren nach einem der Ansprüche 1 bis 3, wobei die Überlagerungs-Stabilisierungs-Verfahrensmeldung eines von periodisch und in dem Fall, dass eine Aktualisierung notwendig ist, die auf eine Änderung in Netzwerkverbindungen zurückzuführen ist, gesendet wird.

5. Verfahren nach einem der Ansprüche 1 bis 4, wobei die Anweisung eines von dem Folgenden umfasst:
einen Hinweis, dass der Manager-Knoten als ein Manager-Knoten autorisiert ist;
eine Identität von zumindest einem Knoten, von dem Netzwerkverwaltungsinformation benötigt wird; und
Anpassungen zu einem von Feldern ohne Wiederholer und Feldern maximaler Wiederholung.

6. Verfahren nach einem der Ansprüche 1 bis 5, weiterhin umfassend:
Bestimmen, ob die Netzwerkverwaltungsinformation zuvor zu dem Manager-Knoten gesendet worden ist und, wenn dies der Fall ist, Bestimmen, ob irgendwelche Änderungen zu der Verwaltungsinformation erfolgt sind und, wenn dies der Fall ist, Senden der Netzwerkverwaltungsinformation zu dem Manager-Knoten.

7. Verfahren nach einem der Ansprüche 1 bis 6, weiterhin umfassend:
Bestimmen (S3), ob Netzwerkverwaltungsinformation von dem Agenten-Knoten angefordert worden ist, und, wenn dies der Fall ist, Senden der Netzwerkverwaltungsinformation zu dem Manager-Knoten.

8. Agenten-Knoten (2) zur Verwendung in einem verteilten Kommunikationsnetzwerk, der Agenten-Knoten umfassend einen Netzwerkverwaltungsprotokollagenten (6) und wobei der Agenten-Knoten **dadurch gekennzeichnet ist, dass** er weiterhin umfasst:
einen Empfänger (7) zum Empfangen einer verteilten Hash-Tabellen, DHT,-Überlagerungs-Stabilisierungs-Verfahrensmeldung, wobei die Überlagerungs-Stabilisierungs-Verfahrensmeldung eine Anweisung für den Agenten-Knoten (2) zum Senden von Netzwerkverwaltungsinformation zu einem Manager-Knoten (1) aufweist;
einen Prozessor (8) zum Erzeugen einer Antwortmeldung, wobei die Antwortmeldung die benötigte Netzwerkverwaltungsinformation beinhaltet; und
einen Sender (9) zum Senden der Antwortmeldung zu dem Manager-Knoten (1).

9. Agenten-Knoten (2) nach Anspruch 8, wobei der Prozessor (8) ausgebildet ist zum Bestimmen der Anwesenheit in der DHT-Überlagerungs-Stabilisierungs-Verfahrensmeldung von einem von:
einem Hinweis, dass der Manager-Knoten als ein Manager-Knoten autorisiert ist;
einer Identität von zumindest einem Knoten, von dem Netzwerkverwaltungsinformation benötigt wird; und
Anpassungen zu einem von Feldern ohne Wiederholer und Feldern maximaler Wiederholung.

10. Agenten-Knoten (2) nach Anspruch 8 oder 9, wobei der Prozessor (8) ausgebildet ist zum Bestimmen, ob die Netzwerkverwaltungsinformation zuvor zu dem Manager-Knoten (1) gesendet worden ist und, wenn dies der Fall ist, Bestimmen, ob irgendwelche Änderungen zu der Verwaltungsinformation erfolgt sind.

11. Agenten-Knoten (2) nach einem der Ansprüche 7 bis 10, wobei der Prozessor (8) ausgebildet ist zum Bestimmen, ob Netzwerkverwaltungsinformation von dem Agenten-Knoten angefordert worden ist.

12. Manager-Knoten (1) zur Verwendung in einem verteilten Kommunikationsnetzwerk, der Manager-Knoten umfassend einen Netzwerkverwaltungsverwalter (13) und wobei der Manager-Knoten **dadurch gekennzeichnet ist, dass** er weiterhin umfasst:
einen Sender (14) zum Senden, in Richtung zu einem Agenten-Knoten (2), einer verteilten Hash-Tabellen, DHT,-Überlagerungs-Stabilisierungs-Verfahrensmeldung, wobei die Überlagerungs-Stabilisierungs-Verfahrensmeldung eine Anweisung für den Agenten-Knoten (2) zum Senden von Netzwerkverwaltungsinformation zu einem Manager-Knoten (1) aufweist; und
einen Empfänger (15) zum Empfangen von Netzwerkverwaltungsinformation von dem Agenten-Knoten (2).

13. Computerprogramm (11), umfassend computerlesbare Code-Mittel, die, beim Ausführen auf einem Agenten-Knoten (2) in einem verteilten Kommunikationsnetzwerk, den Agenten-Knoten veranlassen, das Verfahren nach einem der Ansprüche 1 bis 7 auszuführen.

14. Computerprogramm (18), umfassend ein computerlesbares Code-Mittel, **dadurch gekennzeichnet, dass**, beim Ausführen auf einem Manager-Knoten (1) in einem verteilten Kommunikationsnetzwerk, es den Manager-Knoten veranlasst, die folgenden Schritte auszuführen:
Senden, in Richtung zu einem Agenten-Knoten (2), einer verteilten Hash-Tabellen, DHT,-Überlagerungs-Stabilisierungs-Verfahrensmeldung, wobei die Überlagerungs-Stabilisierungs-Verfahrensmeldung eine Anweisung für den Agenten-Knoten zum Senden von Netzwerkverwaltungsinformation zu einem Manager-Knoten aufweist; und
Empfangen von Netzwerkverwaltungsinformation von dem Agenten-Knoten.

15. Computerprogrammprodukt, umfassend ein computerlesbares Medium (10; 12; 17; 19) und ein Computerprogramm (11; 18) nach Anspruch 13 oder Anspruch 14, wobei das Computerprogramm auf dem computerlesbaren Medium gespeichert ist.

## Revendications

1. Procédé, au niveau d'un noeud agent (2), consistant à fournir des informations de gestion de réseau à un noeud gestionnaire (1) dans un réseau de communication distribué, le procédé étant **caractérisé par** les étapes de :
réception (S2) d'un message de procédure de stabilisation de recouvrement de Table de Hachage Distribuée, DHT, le message de procédure de stabilisation de recouvrement incluant une instruction pour que le noeud agent envoie des informations de gestion de réseau au noeud gestionnaire ; et
envoi (S4) d'informations de gestion de réseau au noeud gestionnaire.

2. Procédé selon la revendication 1, dans lequel les informations de gestion de réseau sont envoyées en utilisant n'importe lequel d'un Protocole de Gestion de Réseau Simple, SNMP, et d'un protocole de Gestion de Dispositif d'Alliance Mobile Ouverte, OMADM.

3. Procédé selon la revendication 1 ou 2, dans lequel l'instruction comprend n'importe lequel d'un message de demande GET BULK, d'un message de demande GET et d'un message de demande SET.

4. Procédé selon l'une quelconque des revendications 1 à 3, dans lequel le message de procédure de stabilisation de recouvrement est envoyé soit de façon périodique soit au cas où une mise à jour est exigée par suite d'un changement d'états de réseau.

5. Procédé selon l'une quelconque des revendications 1 à 4, dans lequel l'instruction inclut en outre n'importe lequel de :
une indication que le noeud gestionnaire est autorisé en tant que noeud gestionnaire ;
une identité d'au moins un noeud à partir duquel des informations de gestion de réseau sont exigées ; et
des ajustements à n'importe lequel de champs non répéteurs et de répétition maximale.

6. Procédé selon l'une quelconque des revendications 1 à 5, comprenant en outre :
la détermination si des informations de gestion de réseau ont précédemment été envoyées au noeud gestionnaire et, s'il en est ainsi, la détermination si n'importe quels changements aux informations de gestion se sont produits et, s'il en est ainsi, l'envoi des informations de gestion de réseau au noeud gestionnaire.

7. Procédé selon l'une quelconque des revendications 1 à 6, comprenant en outre :
la détermination (S3) si des informations de gestion de réseau ont été demandées en provenance du noeud agent et, s'il en est ainsi, l'envoi d'informations de gestion de réseau au noeud gestionnaire.

8. Noeud agent (2) pour une utilisation dans un réseau de communication distribué, le noeud agent comprenant un agent de protocole de gestion de réseau (6) et dans lequel le noeud agent est
**caractérisé en ce qu**'il comprend en outre
un récepteur (7) pour recevoir un message de procédure de stabilisation de recouvrement de Table de Hachage Distribuée, DHT, le message de procédure de stabilisation de recouvrement incluant une instruction pour que le noeud agent (2) envoie des informations de gestion de réseau à un noeud gestionnaire (1) ;
un processeur (8) pour produire un message de réponse, le message de réponse incluant les informations de gestion de réseau exigées ; et
un émetteur (9) pour envoyer le message de réponse au noeud gestionnaire (1).

9. Noeud agent (2) selon la revendication 8, dans lequel le processeur (8) est agencé pour déterminer la présence, dans le message de procédure de stabilisation de recouvrement de DHT, de n'importe lequel de :
une indication que le noeud gestionnaire est autorisé en tant que noeud gestionnaire ;
une identité d'au moins un noeud à partir duquel des informations de gestion de réseau sont exigées ; et
des ajustements à n'importe lequel de champs non répéteurs et de répétition maximale.

10. Noeud agent (2) selon la revendication 8 ou 9, dans lequel le processeur (8) est agencé pour déterminer si des informations de gestion de réseau ont précédemment été envoyées au noeud gestionnaire (1) et, s'il en est ainsi, pour déterminer si n'importe quels changements aux informations de gestion se sont produits.

11. Noeud agent (2) selon l'une quelconque des revendications 7 à 10, dans lequel le processeur (8) est agencé pour déterminer si des informations de gestion de réseau ont été demandées en provenance du noeud agent.

12. Noeud gestionnaire (1) à utiliser dans un réseau de communication distribué, le noeud gestionnaire comprenant un gestionnaire de gestion de réseau (13) et dans lequel le noeud gestionnaire est
**caractérisé en ce qu**'il comprend en outre :
un émetteur (14) pour envoyer vers un noeud agent (2) un message de procédure de stabilisation de recouvrement de Table de Hachage Distribuée, DHT, le message de procédure de stabilisation de recouvrement incluant une instruction pour que le noeud agent (2) envoie des informations de gestion de réseau à un noeud gestionnaire (1) ; et
un récepteur (15) pour recevoir des informations de gestion de réseau en provenance du noeud agent (2).

13. Programme informatique (11), comprenant un moyen formant code lisible par ordinateur qui, lorsqu'il est exécuté sur un noeud agent (2) dans un réseau de communication distribué, amène le noeud agent à effectuer le procédé selon l'une quelconque des revendications 1 à 7.

14. Programme informatique (18), comprenant un moyen formant code lisible par ordinateur **caractérisé en ce que,** lorsqu'il est exécuté sur un noeud gestionnaire (1) dans un réseau de communication distribué, il amène le noeud gestionnaire à effectuer les étapes de :
envoi vers un noeud agent (2) d'un message de procédure de stabilisation de recouvrement de Table de Hachage Distribuée, DHT, le message de procédure de stabilisation de recouvrement incluant une instruction pour que le noeud agent envoie des informations de gestion de réseau à un noeud gestionnaire ; et
réception d'informations de gestion de réseau en provenance du noeud agent.

15. Produit formant programme informatique comprenant un support lisible par ordinateur (10; 12; 17; 19) et un programme informatique (11; 18) selon la revendication 13 ou la revendication 14, dans lequel le programme informatique est stocké sur le support lisible par ordinateur.
